(19) Europäisches Patentamt

European Patent Office

Office européen des brevets

(11) **EP 2 562 707 A1**

(12) **EUROPEAN PATENT APPLICATION**

(43) Date of publication:
**27.02.2013 Bulletin 2013/09**

(21) Application number: **12180600.4**

(22) Date of filing: **16.08.2012**

(51) Int Cl.:
***G06Q 30/02*** *(2012.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.08.2011 KR 20110085057**

(71) Applicant: **Samsung Electronics Co., Ltd.**
**Suwon-si, Gyeonggi-do, 443-742 (KR)**

(72) Inventors:
• **Kim, Jeong-Ja**
**Gyeonggi-do (KR)**
• **Shin, Jae-Hwa**
**Gyeonggi-do (KR)**
• **Kwak, Hyun-Mi**
**Gyeonggi-do (KR)**

(74) Representative: **Jenkins, Richard Gavin**
**Harrison Goddard Foote**
**Saviour House**
**9 St Saviourgate**
**York, YO1 8NQ (GB)**

(54) **Apparatus and method for providing advertising service in portable terminal**

(57)     An apparatus and method for providing an advertising service in a portable terminal are provided. The apparatus includes an attribute information confirmation unit for sorting attribute information based on a priority of each piece of the attribute information by acquiring landmark information and then, by recognizing attribute information in which information to be used to determine a user preferences is written; a request information determination unit for recognizing a user-preferred advertisement by using information written in the sorted attribute information; and a controller for controlling the attribute information confirmation unit and the request information determination unit to receive the user-preferred advertisement.

FIG.1

**Description**

**BACKGROUND OF THE INVENTION**

1. Field of the Invention

The present invention relates generally to an advertising service using a portable terminal, and more particularly, to a method and apparatus for determining a user-preferred advertisement by using attribute information of landmark information generated by a user.

2. Description of the Related Art

Portable terminals have become more common in modern life for people of all ages. Thus, service providers and terminal manufacturers are competitively developing products and services for their users.

For example, the portable terminal has developed into a multimedia device capable of providing various services such as phonebooks, games, short messages, e-mails, wake-up calls, MPEG-1 Audio Layer 3 (MP3) players, scheduling, digital cameras, multimedia messages, and wireless Internet.

Recently, instead of paper advertisements, an electronic advertisement is provided through the Internet or other network. The electronic advertisement includes an electronic gift card, an electronic discount coupon, an electronic ticket, event information, and the like. A service of a vendor can then be used by utilizing the electronic advertisement.

In general, the electronic advertisement is provided by using a method in which the advertisement is collectively provided to a subscribed user, or is provided by using a method in which the advertisement is provided by an advertising vendor located within a specific distance of a location of the user by using location information of the portable terminal.

However, the method above cannot recognize an actual user-preferred advertisement and thus provides a user with an advertisement by from the perspective of an advertisement vendor. Therefore, the user receives an unsolicited advertisement, and the advertisement vendor cannot improve its marketing.

Accordingly, in order to solve the above problem, there is a need for an apparatus and method for recognizing a user-preferred advertisement in a portable terminal so as to request and receive only the user-preferred advertisement.

**SUMMARY OF THE INVENTION**

An aspect of the present invention is to solve at least the above-mentioned problems and/or disadvantages and to provide at least the advantages described below. Accordingly, an aspect of the present invention is to provide an apparatus and method for recognizing a user-preferred advertisement in a portable terminal.

Another aspect of the present invention is to provide an apparatus and method for recognizing a user-preferred advertisement by analyzing landmark information in a portable terminal.

Another aspect of the present invention is to provide an apparatus and method for recognizing a user-preferred advertisement by using information included in attribute information of a landmark frequently input by a user in a portable terminal.

In accordance with an aspect of the present invention, an apparatus and method for providing an advertising service in a portable terminal are provided. The apparatus includes an attribute information confirmation unit for sorting attribute information based on a priority of each piece of the attribute information by acquiring landmark information and then, by recognizing attribute information in which information to be used to determine a user preferences is written; a request information determination unit for recognizing a user-preferred advertisement by using information written in the sorted attribute information; and a controller for controlling the attribute information confirmation unit and the request information determination unit to receive the user-preferred advertisement.

In accordance with another aspect of the present invention, a method of providing an advertising service in a portable terminal is provided. The method includes sorting attribute information based on a priority of each piece of the attribute information by acquiring landmark information and then recognizing attribute information in which information to be used to determine a user preferences is written; and recognizing a user-preferred advertisement by using information written in the sorted attribute information.

**BRIEF DESCRIPTION OF THE DRAWINGS**

The above and other aspects, features and advantages of certain embodiments of the present invention will be more apparent from the following detailed description taken in conjunction with the accompanying drawings, in which:

FIG. 1 is a block diagram illustrating a structure of a portable terminal for providing an advertisement to a user by using landmark information according to an embodiment of the present invention;

FIG. 2 is a flowchart illustrating a process of requesting an advertisement in a portable terminal according to an embodiment of the present invention;

FIG. 3 illustrates landmark information according to an embodiment of the present invention; and

FIG. 4A to 4E illustrate a process of requesting an advertisement in a portable terminal according to an embodiment of the present invention.

## DETAILED DESCRIPTION OF EMBODIMENTS OF THE PRESENT INVENTION

Embodiments of the present invention will be described herein below with reference to the accompanying drawings. In the following description, well-known functions or constructions are not described in detail since they would obscure the invention in unnecessary detail.

The present invention described below relates to an apparatus and method for providing a user-preferred advertisement after recognizing the user-preferred advertisement by analyzing landmark information in a portable terminal. Additionally, the advertisement includes event information, coupon information, an electronic gift card, an electronic ticket, or the like provided by a vendor.

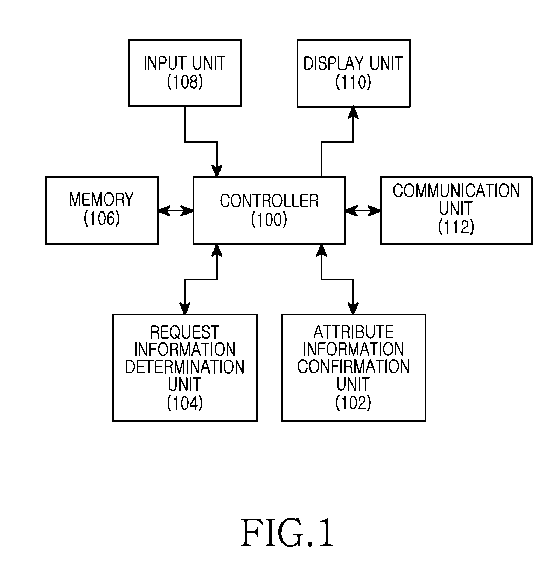

FIG. 1 is a block diagram illustrating a structure of a portable terminal for providing an advertisement to a user by using landmark information according to an embodiment of the present invention.

Referring to FIG. 1, the portable terminal includes a controller 100, an attribute information confirmation unit 102, a request information determination unit 104, a memory 106, an input unit 108, a display unit 110, and a communication unit 112.

The controller 100 of the portable terminal provides overall control to the portable terminal. For example, the controller 100 processes and controls voice telephony and data communications. Aside from its typical function, according to the present invention, the controller 100 provides control so that a user-preferred advertisement is recognized by using landmark information configured by the user.

The controller 100 analyzes the landmark information so that the user-preferred advertisement can be recognized based on attribute information input frequently by the user.

Under the control of the controller 100, the attribute information confirmation unit 102 acquires and analyzes the landmark information generated by the user. The attribute information confirmation unit 102 can acquire landmark information stored in the portable terminal or landmark information stored in a server for providing an advertising service. Moreover, the attribute information confirmation unit 102 confirms the attribute information input frequently by the user among a plurality of pieces of attribute information included in the landmark information, and sorts the attribute information such that the frequently input attribute information is sorted in priority order.

The request information determination unit 104 determines the user-preferred advertisement under the control of the controller 100. The request information determination unit 104 calculates an advertisement request rate for an element included in the attribute information frequently input by the user, and then determines that an element having a high advertisement request rate corresponds to the user-preferred advertisement. Herein, the advertisement request rate is used in the determination of the user-preferred advertisement, and the element included in the attribute information is information directly input by the user to the attribute information. That is, the request information determination unit 104 determines the user-preferred advertisement by using information that is most frequently input among a plurality of pieces of information that is input to the attribute information frequently written by the user. For example, if it is assumed that attribute information for a location is frequently input by the user (e.g., a name, a location, an update time, a category, and the like), the request information determination unit 104 can classify a plurality of pieces of landmark information to which the attribute information for the location is written into a group of identical areas, and calculates an advertisement request rate for each classified group (or area).

The memory 106 includes Read Only Memory (ROM), Random Access Memory (RAM), and flash ROM. The ROM stores a microcode of a program, by which the controller 100, the attribute information confirmation unit 102, and the request information determination unit 104 are processed and controlled, and a variety of reference data.

The RAM is a working memory of the controller 100 and stores temporary data that is generated during program operation. The flash ROM stores a variety of rewritable data, such as phonebook entries, outgoing messages, incoming messages, and information relating to a user's touch input point, and according to the embodiment of the present invention, stores landmark information configured by the user and information for calculating an advertisement request rate. The information for calculating an advertisement request rate includes, for example, an input frequency and a size of the group of identical areas or of elements having same property.

The input unit 108 includes a plurality of function keys such as numeral key buttons of "0" to "9", a menu button, a cancel button, an OK button, a talk button, an end button, an Internet access button, a navigation key (or direction key) button, and a character input key. Key input data, which is input when the user presses these keys, is provided to the controller 100. Moreover, the input unit 108 generates input data of the user to generate the landmark information.

The display unit 110 displays information such as state information, which is generated while the portable terminal operates, a limited number of characters, large volumes of moving and still pictures, etc. The display unit 110 may be a color Liquid Crystal Display (LCD), an Active Matrix Organic Light Emitting Diode (AMOLED), and the like. The display unit 110 may include a touch input device as an input device when using a touch input type portable terminal. Additionally, the display unit 110 recognizes advertising that a user prefers and outputs a received advertisement

In fact, it is within the spirit and scope of the presently claimed invention that the input unit 108 and display unit 110 could all be served by a single touch screen. That is, a touch sensitive display, called as a touch screen, may be used as the display unit 110. In this situation, touch input may be performed via the touch sensitive display.

The communication unit 112 transmits and receives a Radio Frequency (RF) signal of data that is input and output through an antenna (not shown). For example, in a transmitting process, data to be transmitted is subject to a channel-coding process and a spreading process, after which the data is transformed to an RF signal. In a receiving process, the RF signal is received and transformed to a base-band signal, and the base-band signal is then de-spread and channel-decoded, thereby restoring the data. The communication unit 112 requests the user-preferred advertisement and receives an advertisement corresponding to the request.

Although a function of the attribute information confirmation unit 102 and the request information determination unit 104 can be performed by the controller 100 of the portable terminal, they are separately constructed in the present invention for illustrative purposes only. Thus, one of ordinary skill in the art understands that various modifications can be made within the scope of the present invention. For example, functions of the two elements can be both processed by the controller 100.

The method described above in relation with FIG. 1 under of the present invention may be provided as one or more instructions in one or more software modules stored in the memory 106. The software modules may be executed by the controller 100.

According to the present invention, for example, an electronic device comprising one or more controller, the touch input device as the display unit 110, the memory 106 and one or software modules stored in the memory configured for execution by the controller, the software modules comprising one or more instruction to perform methods described through the specification as above or hereunder.

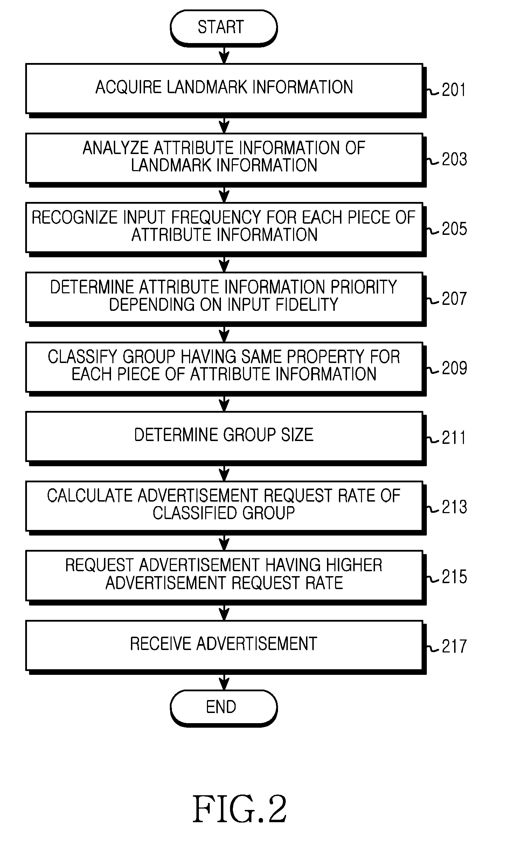

FIG. 2 is a flowchart illustrating a process of requesting an advertisement in a portable terminal according to an embodiment of the present invention.

Referring to FIG. 2, in step 201, the portable terminal acquires landmark information. The landmark information is location information relating to a region or a building a user is interested in. Further, the landmark information may be location information corresponding to an advertisement to be provided to the user. That is, the landmark information is information regarding an area capable of providing an advertisement to the user of the portable terminal, and is registered to the portable terminal or a server for providing an advertising service. The portable terminal determines a specific area and can then acquire only landmark information corresponding to the determined area, restricting a range of an area for providing a user-preferred advertisement.

In step 203, the portable terminal analyzes attribute information of the landmark information. In step 205, the portable terminal recognizes an input frequency for each piece of attribute information. The attribute information is information input by the user regarding the landmark information. Examples of the attribute information include a name of a landmark, a location of the landmark, a category of the landmark, a time-stamp of the landmark, a priority of the landmark, a geographical area of the landmark, a Uniform Resource Locator (URL) related to the landmark, an author of the landmark information, a description of the landmark, and the like.

Furthermore, the input frequency for each piece of attribute information indicates how frequently the attribute information is input by the user, and is used for recognizing a user preference by using the fact that the user inputs only certain pieces of information required to recognize the landmark according to the user preference in general, instead of writing all pieces of the attribute information when the user creates landmark information. For example, if it is assumed that the user of the portable terminal must write attribute information corresponding to location information of the landmark, the portable terminal determines a user-preferred area by using location information of a plurality of landmarks.

According to the embodiment of the present invention, if it is assumed that, among 100 pieces of landmark information, 70 pieces are landmark information to which location information is input, 50 pieces are landmark information to which category information is input, and 10 pieces are landmark information to which URL information is input, then an input frequency of attribute information for location information of the portable terminal is 0.7 (70/100) and an input frequency of attribute information for category information of the portable terminal is 0.5 (50/100). Moreover, an input frequency of attribute information for a URL is 0.1 (10/100). In this case, input frequencies for a name attribute (mandatory) and a time-stamp (auto-generated) attribute are not recognized. This is because the name attribute and the landmark time-stamp are essential input information of the landmark information, and are information written to the all pieces of landmark information, thereby having no effect on the calculation of the input frequency.

In step 207, the portable terminal sorts a priority of attribute information depending on an input frequency. In step 209, the portable terminal performs a clustering process for grouping elements having the same property for each piece of attribute information. Herein, the portable terminal can skip the clustering process with respect to attribute information in which an input frequency is 0 or is less than a threshold, and thus can simplify a process for recognizing the user-preferred advertisement.

Moreover, the portable terminal groups information having the same property among multiple pieces of information written by the user for each piece of the sorted attribute information in order to recognize the user-preferred advertisement. For example, the written information is information actually written to corresponding attribute information. Examples of location information corresponding to a first priority (i.e., a first priority of an input frequency) may include a plurality of pieces of written information (e.g., a name of a neighborhood such as The Lower East Side and Hell's Kitchen). The portable terminal classifies the same written information as one group. This is equivalent to classifying an area written to a plurality of pieces of landmark information into a group. The aforementioned process of grouping elements having the same property is performed for each piece of attribute information.

In step 211, the portable terminal determines a size of a group comprising elements having the same property. The size of the group is a size of the grouped elements having the same property, and may also be the number of elements included in the group. The size is used to determine an advertisement requested by the user of the portable terminal.

In step 213, the portable terminal calculates an advertisement request rate for the classified group. The advertisement request rate is a probability that an element belonging to the group is used to determine the user-preferred advertisement. The portable terminal calculates the advertisement request rate by applying a weight to an input frequency for each piece of attribute information and the group size.

For example, the portable terminal calculates an advertisement request rate P for the group by using Equation (1) below.

$$P = \{Ws \times (Group \quad size)\} + \{(1 - Wp) \times F\} \qquad ......(1)$$

In Equation (1), P denotes probability, Ws denotes a weight corresponding to a group size, Wp denotes a weight corresponding to an input frequency, and F denotes an input frequency based on an attribute.

That is, the portable terminal can use the input frequency to recognize attribute information to which information to be used to determine a user preference is written. The portable terminal can then use information which is most frequently written among elements included in the attribute to determine the user-preferred advertisement.

Further, the portable terminal can define a weight for the input frequency and the group size as illustrated in Table 1 below, and can use the defined weight when calculating the advertisement request rate.

Table 1

| Frequency (F) | First Weight | Group Size (Size) | Second Weight |
|---|---|---|---|
| 1st | 3 | 1 | 2 |
|  |  | 3 |  |
| 2nd |  | 2 | 1.8 |
| 3rd | 2 | 3 | 1.6 |
|  |  | 2 |  |
| 4th |  | 4 | 1.4 |
| 5th | 1 | 5 | 1.2 |
|  |  | 1 |  |
| 6th |  | 6 | 1.1 |

Table 1 above is created according to the embodiment of the present invention. A value F to be substituted into Equation (1) above is set according to a priority of the input frequency. That is, F is set to 3 when the attribute information has a 1st priority and a 2nd priority, and F is set to 2 when the attribute information has a 3rd priority and a 4th priority, and F is set to 1 when the attribute information has a 5th priority and a 6th priority.

A value of the group size to be substituted into Equation (1) above is set by using the group size determined in step 211. That is, a value 3 is assigned to a group having a size 1 or 2, a value 2 is assigned to a group having a size 3 or 4, and a value 1 is assigned to a group having a size 5 or 6.

Additionally, a different weight is applied according to the input frequency F and the group size, and the portable terminal determines the user-preferred advertisement by using Equation 1 above.

In step 215, the portable terminal determines an advertisement having a high advertisement request rate as the user-preferred advertisement, and requests the advertisement. In step 217, the portable terminal receives the requested advertisement and the procedure ends.

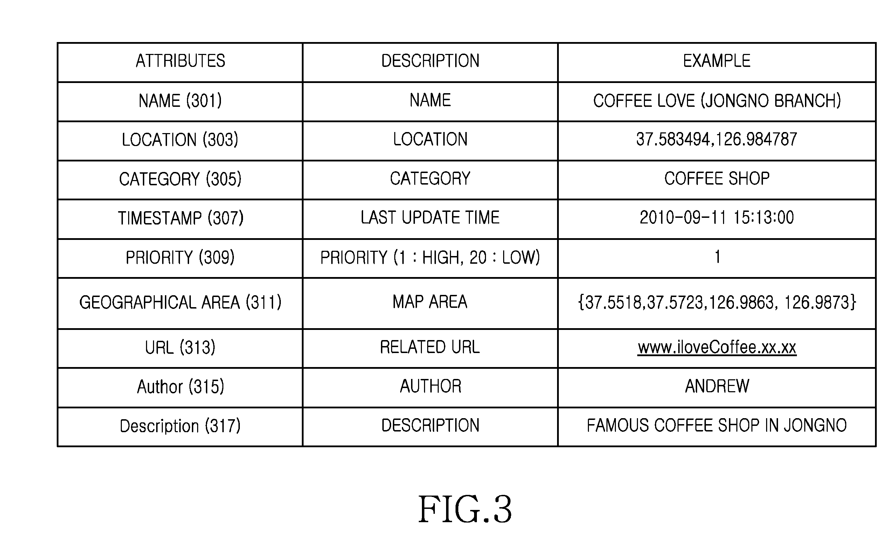

FIG. 3 illustrates landmark information according to an embodiment of the present invention.

Referring to FIG. 3, the landmark information includes attribute information such as the name 301 of a landmark, the location 303 of the landmark, the category 305 of the landmark, the time-stamp 307 of the landmark, the priority 309 of the landmark, the geographical area 311 of the landmark, the URL 313 related to the landmark, the author 315 of the landmark information, the description 317 of the landmark, and the like.

As illustrated, when the user of the portable terminal generates landmark information regarding a "Starbucks", the user inputs "Starbucks (Wall Street location" as the name of a landmark, and inputs location information of the landmark. In this case, the portable terminal provides a menu for acquiring location information, and upon detecting of a user input for the menu, can operate a Global Positioning System (GPS) module to acquire the latitude, longitude, and altitude information of the landmark. In addition, the portable terminal can acquire and configure location information of the landmark by using a word included in a name attribute of the landmark as a search word.

In addition, the user of the portable terminal confirms whether a category of "Starbucks" which is the landmark generated by the user is a coffee shop and then inputs the coffee shop to a category attribute. The portable terminal confirms an update time of the landmark information and configures time information to the attribute.

Moreover, the user of the portable terminal can display an interest level of the landmark by determining a priority of the generated landmark information. Further, the user of the portable terminal determines an area of the landmark displayed on a map by using a method of inputting the location information.

In addition, the user of the portable terminal sets.starbucks.com, which is an address of a homepage provided from the landmark information to be generated, to a URL attribute, and sets "Andrew", which is the name of the user who generated the landmark information, to an author attribute.

Moreover, the user of the portable terminal can add a description regarding a known coffee shop to a description attribute as an additional description for the landmark to be generated.

The information that is input to the attribute information can be used to determine an advertisement preferred by a user who will receive the advertisement.

The user of the portable terminal should input the aforementioned attribute information when generating the landmark information. In this case, the name attribute (mandatory) and the time-stamp (auto-generated) attribute are essential information which must be input when generating the landmark information, and the remaining pieces of attribute information can be input based on the user's choice. In general, the user is inconvenienced when inputting a plurality of pieces of attribute information one by one, and thus the user will write only attribute information according to a user preference.

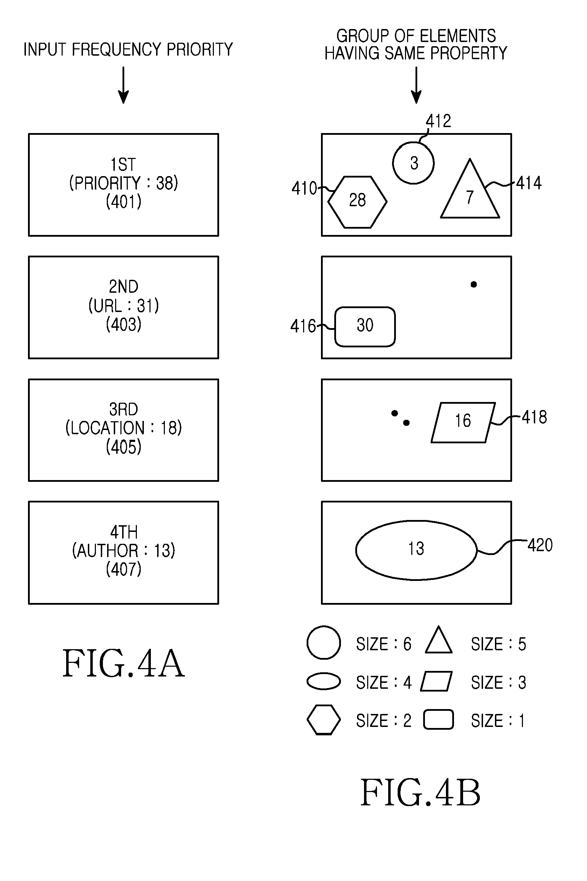

FIGS. 4A to 4E illustrates a process of requesting an advertisement in a portable terminal according to an embodiment of the present invention.

FIG. 4A illustrates a process of grouping elements having the same property for each piece of attribute information in a portable terminal according to an embodiment of the present invention.

Referring to FIG. 4A, the portable terminal requests and receives a user-preferred advertisement according to the embodiment of the present invention. The portable terminal determines a user-requested advertisement by using attribute information of landmark information configured by the user. In general, the portable terminal selects an advertisement corresponding to a user location. However, there is a problem in that the user may receive an unsolicited advertisement at the location.

In order to solve this problem, the portable terminal, according to the present invention, acquires landmark information. The landmark information includes a plurality of pieces of attribute information, and additional information is input by the user.

Accordingly, the portable terminal confirms how frequently the user inputs the attribute information, and determines the user-preferred advertisement by using elements written to attribute information that is frequently input.

That is, the portable terminal analyzes a plurality of pieces of landmark information as illustrated in FIG. 4A and then determines a priority of an input frequency for attribute information to which information is input by the user.

As illustrated, the portable terminal evaluates the number of landmarks to which attribute information is input and thus determines the priority in the order to attribute information for a priority, a URL, location information, and an author.

For example, the portable terminal confirms that the number of landmarks to which attribute information for a priority is input is 38 of 100 pieces of landmark information, and then classifies the attribute information for the priority as a 1st priority. The portable terminal then confirms that the number of landmarks to which URL information is input is 21, and then classifies attribute information for the URL as a 2nd priority. Additionally, the portable terminal confirms that the number of landmarks to which location information is input is 18, and then classifies attribute information for the location information as a 3rd priority. Further, the portable terminal confirms that the number of landmarks to which an author is input is 13, and then classifies attribute information for the author as a 4th priority.

According to the aforementioned process, the portable terminal determines a preference of a user who frequently inputs priority information among a plurality of pieces of attribute information of landmark information.

Thereafter, as illustrated in FIG. 4B, the portable terminal confirms the content of attribute information and groups elements having the same priority. Herein, the elements having the same priority may be information (or words) having the same input content among a plurality of pieces of attribute information of respective landmarks. For example, elements having the same priority of attribute information for a priority are divided into elements which are input as the 1st priority, elements which are input as the 2nd priority, and elements which are input as an extra priority, and are then classified into respective groups.

That is, as illustrated, among 38 pieces of landmark information to which attribute information for a priority is input, the portable terminal performs grouping on the 28 elements 410 having the same priority (e.g., a 1st priority), and performs grouping on the 3 elements 412 having the same priority (i.e., a 2nd priority). Moreover, the portable terminal performs grouping on the 7 elements 414 having the same priority (e.g., a 3rd priority) among 38 pieces of landmark information to which attribute information for a priority is input.

Furthermore, the portable terminal performs grouping on 30 URLs 416 having the same priority among 31 pieces of landmark information to which attribute information for a URL is input. One point that is not grouped implies information different from the grouped URL.

Further, the portable terminal performs grouping on the 16 elements 418 having the same priority (e.g., a downtown name such as Gangnam in Seoul, Korea) among 18 pieces of landmark information to which attribute information for location information is input. In this case, two points that are not grouped are elements not having the same priority.

Moreover, the portable terminal performs grouping on the 13 elements 420 having the same priority (e.g., an author name) among 13 pieces of landmark information to which attribute information for an author is input. A numeric character written inside each figure stands for the number of elements having the same priority.

FIG. 4B illustrates a process of recognizing a user-preferred advertisement in a portable terminal according to an embodiment of the present invention.

Referring to FIG. 4B, the portable terminal uses a size of a group classified in FIG. 4A when calculating an advertisement request rate.

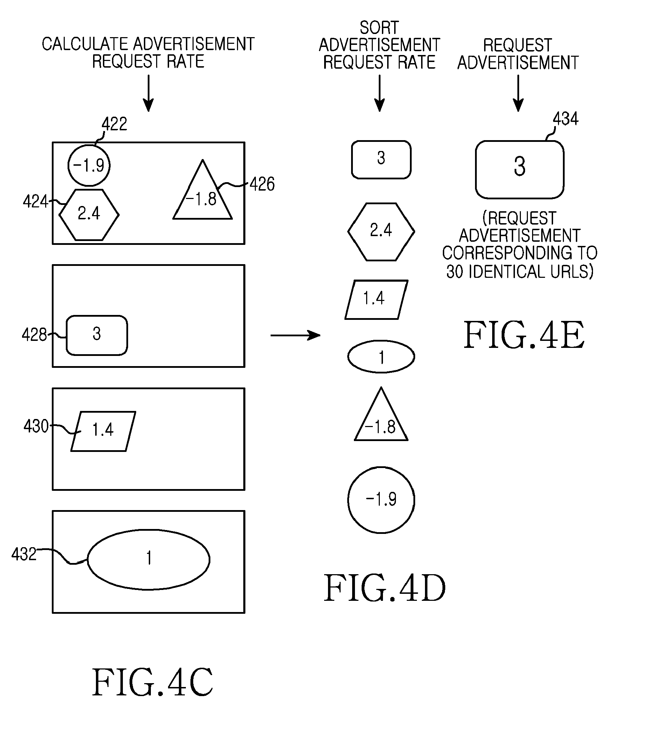

The advertisement request rate implies a probability that elements of the group are used in the determination of the user-preferred advertisement. As illustrated in FIG. 4C, the portable terminal determines that elements 422 corresponding to a circular shape can be used to select a preferred advertisement by using a numeric value corresponding to -1.9.

Moreover, the portable terminal determines that an element 426 corresponding to a triangular shape, an element 424 corresponding to a hexagonal shape, an element 428 corresponding to a square shape, an element 430 corresponding to a trapezoid, and an element 432 corresponding to an ellipse can be used in the selection of the preferred advertisement by using numeric values respectively corresponding to -1.8, 2.4, 3, 1.4, and 1. Herein, the numeric character written inside each figure is an advertisement request rate calculated by the portable terminal. The portable terminal calculates the advertisement request rate by applying a weight to an input frequency for each piece of attribute information and a group size of elements having the same property by using Equation (1) described above with reference to FIG. 1 according to the embodiment of the present invention.

Thereafter, as illustrated in FIG. 4D, the portable terminal sorts the calculated advertisement request rate and determines an element having a high advertisement request rate as an advertisement to be provided to the user. Then, as illustrated, the portable terminal requests an advertisement 434, as shown in FIG. 4E, corresponding to an element of which an advertisement request rate is 3.

According to embodiments of the present invention, landmark information is analyzed to recognize a user-preferred advertisement, and thus a user of a portable terminal can be prevented from receiving an unsolicited advertisement by receiving only the user-preferred advertisement. Moreover, a marketing effect of an advertisement vendor can be improved.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. In addition, an artisan understands and appreciates that a "processor" or "microprocessor" constitute hardware in the claimed invention.

While the present invention has been particularly shown and described with reference to embodiments thereof, it will be understood by those skilled in the art that various changes in form and details may be made without departing from the spirit and scope of the present invention as defined by the appended claims and their equivalents.

**Claims**

1. An apparatus for providing an advertising service in a portable terminal, the apparatus comprising:

   an attribute information confirmation unit for sorting attribute information based on a priority of each piece of the attribute information by acquiring landmark information and then, by recognizing attribute information in which information to be used to determine a user preferences is written;
   a request information determination unit for recognizing a user-preferred advertisement by using information written in the sorted attribute information; and
   a controller for controlling the attribute information confirmation unit and the request information determination unit to receive the user-preferred advertisement.

2. The apparatus of claim 1, wherein the attribute information determination unit recognizes an input frequency that indicates how frequently the user inputs the landmark information for the each piece of the attribute information, and sorts the input frequency according to a priority of the each piece of the attribute information.

3. The apparatus of claim 1, wherein the request information determination unit classifies elements having the same priority into a group from a plurality of pieces of written information of the sorted attribute information, and calculates an advertisement request rate for the group by calculating a probability that the elements of the classified group are used to recognize the user-preferred advertisement.

4. The apparatus of claim 3, wherein the request information determination unit determines a size of the classified group, and calculates an advertisement request rate for the group by applying a weight to the classified group size and an input frequency of the user for the attribute information.

5. The apparatus of claim 4, wherein the request information determination unit calculates the advertisement request rate for the group using:

$$P = \{Ws \times (Group \quad size)\} + \{(1 - Wp) \times F\},$$

where P denotes probability, Ws denotes a weight corresponding to a group size, Wp denotes a weight corresponding to an input frequency, and F denotes an input frequency based on an attribute.

6. A method of providing an advertising service in a portable terminal, the method comprising:

   sorting attribute information based on a priority of each piece of the attribute information; and
   selecting user-preferred advertisement by using information written in the sorted attribute information.

7. The method of claim 6, wherein sorting the attribute information according to a priority of the each piece of the attribute information comprises recognizing an input frequency that indicates how frequently the user inputs the landmark information for each piece of attribute information.

8. The method of claim 6, wherein selecting the user-preferred advertisement comprises:

   analyzing written information of the sorted attribute information;
   classifying elements having the same property into a group among the analyzed written information; and
   calculating an advertisement request rate for the group by calculating a probability that the elements of the classified group are used to recognize the user-preferred advertisement.

9. The method of claim 8, wherein selecting the user-preferred advertisement comprises determining a size of the classified group, and for the user-preferred advertisement, an advertisement request rate for the group is calculated by applying a weight to the classified group size and an input frequency of the user for the attribute information.

**10.** The method of claim 9, wherein, in the calculating of the probability to be used in the determination of the user-preferred advertisement, the advertisement request rate for the group is calculated using:

$$P = \{Ws \times (Group \quad size)\} + \{(1 - Wp) \times F\},$$

where P denotes probability, Ws denotes a weight corresponding to a group size, Wp denotes a weight corresponding to an input frequency, and F denotes an input frequency based on an attribute.

**11.** The method of claim 6, wherein the sorting attribute information based on a priority of each piece of the attribute information is performed by acquiring landmark information and then recognizing attribute information in which information to be used to determine a user preferences is written

**12.** The method of claim 6, wherein the selecting user-preferred advertisement by using information written in the sorted attribute information is performed after recognizing a user-preferred advertisement by using information written in the sorted attribute information.

**13.** An electronic device, comprising:

a controller;
a memory; and
one or more programs, wherein the one or more programs are stored in the memory and configured to cause, when executed by the electronic device, the electronic device to perform the method of any one of claims 6 to 12.

FIG.1

```
                    ┌─────────────┐
                    │    START    │
                    └──────┬──────┘
                           ▼
    ┌─────────────────────────────────────────┐
    │      ACQUIRE LANDMARK INFORMATION        │─ 201
    └─────────────────────┬───────────────────┘
                           ▼
    ┌─────────────────────────────────────────┐
    │     ANALYZE ATTRIBUTE INFORMATION OF     │─ 203
    │           LANDMARK INFORMATION           │
    └─────────────────────┬───────────────────┘
                           ▼
    ┌─────────────────────────────────────────┐
    │  RECOGNIZE INPUT FREQUENCY FOR EACH PIECE OF  │─ 205
    │           ATTRIBUTE INFORMATION          │
    └─────────────────────┬───────────────────┘
                           ▼
    ┌─────────────────────────────────────────┐
    │  DETERMINE ATTRIBUTE INFORMATION PRIORITY  │─ 207
    │        DEPENDING ON INPUT FIDELITY       │
    └─────────────────────┬───────────────────┘
                           ▼
    ┌─────────────────────────────────────────┐
    │   CLASSIFY GROUP HAVING SAME PROPERTY FOR  │─ 209
    │      EACH PIECE OF ATTRIBUTE INFORMATION  │
    └─────────────────────┬───────────────────┘
                           ▼
    ┌─────────────────────────────────────────┐
    │           DETERMINE GROUP SIZE           │─ 211
    └─────────────────────┬───────────────────┘
                           ▼
    ┌─────────────────────────────────────────┐
    │   CALCULATE ADVERTISEMENT REQUEST RATE OF  │─ 213
    │            CLASSIFIED GROUP              │
    └─────────────────────┬───────────────────┘
                           ▼
    ┌─────────────────────────────────────────┐
    │    REQUEST ADVERTISEMENT HAVING HIGHER   │─ 215
    │        ADVERTISEMENT REQUEST RATE        │
    └─────────────────────┬───────────────────┘
                           ▼
    ┌─────────────────────────────────────────┐
    │          RECEIVE ADVERTISEMENT           │─ 217
    └─────────────────────┬───────────────────┘
                           ▼
                    ┌─────────────┐
                    │     END     │
                    └─────────────┘
```

# FIG.2

| ATTRIBUTES | DESCRIPTION | EXAMPLE |
|---|---|---|
| NAME (301) | NAME | COFFEE LOVE (JONGNO BRANCH) |
| LOCATION (303) | LOCATION | 37.583494,126.984787 |
| CATEGORY (305) | CATEGORY | COFFEE SHOP |
| TIMESTAMP (307) | LAST UPDATE TIME | 2010-09-11 15:13:00 |
| PRIORITY (309) | PRIORITY (1 : HIGH, 20 : LOW) | 1 |
| GEOGRAPHICAL AREA (311) | MAP AREA | {37.5518,37.5723,126.9863, 126.9873} |
| URL (313) | RELATED URL | www.iloveCoffee.xx.xx |
| Author (315) | AUTHOR | ANDREW |
| Description (317) | DESCRIPTION | FAMOUS COFFEE SHOP IN JONGNO |

FIG.3

INPUT FREQUENCY PRIORITY

GROUP OF ELEMENTS
HAVING SAME PROPERTY

1ST
(PRIORITY : 38)
(401)

2ND
(URL : 31)
(403)

3RD
(LOCATION : 18)
(405)

4TH
(AUTHOR : 13)
(407)

FIG.4A

FIG.4B

SIZE : 6    SIZE : 5
SIZE : 4    SIZE : 3
SIZE : 2    SIZE : 1

CALCULATE ADVERTISEMENT
REQUEST RATE

SORT
ADVERTISEMENT
REQUEST RATE

REQUEST
ADVERTISEMENT

422

424

(-1.9)

2.4

-1.8

426

3

428

1.4

430

1

432

3

2.4

1.4

1

-1.8

-1.9

3

434

(REQUEST
ADVERTISEMENT
CORRESPONDING TO
30 IDENTICAL URLS)

FIG.4E

FIG.4D

FIG.4C

**EP 2 562 707 A1**

## EUROPEAN SEARCH REPORT

Application Number

EP 12 18 0600

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | "STATEMENT IN ACCORDANCE WITH THE NOTICE FROM THE EUROPEAN PATENT OFFICE DATED 1 OCTOBER 2007 CONCERNING BUSINESS METHODS - EPC / ERKLAERUNG GEMAESS DER MITTEILUNG DES EUROPAEISCHEN PATENTAMTS VOM 1.OKTOBER 2007 UEBER GESCHAEFTSMETHODEN - EPU / DECLARATION CONFORMEMENT AU COMMUNIQUE DE L'OFFICE EUROP", 20071101, 1 November 2007 (2007-11-01), XP007905525, * Statement in accordance with the Notice from the European Patent Office dated 1 October 2007 concerning business methods(OJ 11/2007; p592-593) The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence was therefore considered required. * ----- | 1-13 | INV. G06Q30/0241 |
| | | | TECHNICAL FIELDS SEARCHED (IPC) |
| | | | G06Q |

The present search report has been drawn up for all claims

| Place of search | Date of completion of the search | Examiner |
|---|---|---|
| The Hague | 12 November 2012 | Marcu, Antoniu |